# EUROPÄISCHE PATENTSCHRIFT

(11) **EP 0 884 405 B1**
(45) Veröffentlichungstag und Bekanntmachung des Hinweises auf die Patenterteilung: **12.09.2001**
(21) Anmeldenummer: 98109385.9
(22) Anmeldetag: 23.05.1998
(51) Int. Cl.: C25D 11/02

(54) **Verfahren zum Erzeugen harter Oxidschichten an der Oberfläche eines Substrats auf Basis von Leichtmetallen**
Process for obtaining hard oxide layers on the surface of a light metal based substrate
Procédé pour obtenir des couches d'oxyde dures sur la surface d'un substrat à base de métaux légers

(30) Priorität: 24.05.1997 DE 19721730
(43) Veröffentlichungstag der Anmeldung: 16.12.1998
(73) Patentinhaber: Vassiliev, Anatoli J., Prof. Dr., 50769 Köln (DE); Eibel, Karl-Heinz, 50169 Kerpen (DE); Olenin, Anatoli V., Dipl.-Ing., 109456 Moskau (RU)
(72) Erfinder: Vassiliev, Anatoli J., Prof. Dr., 50769 Köln (DE); Eibel, Karl-Heinz, 50169 Kerpen (DE); Olenin, Anatoli V., Dipl.-Ing., 109456 Moskau (RU)
(74) Vertreter: Müller-Gerbes, Margot, Dipl.-Ing.

(56) Entgegenhaltungen:
- EP-A- 0 280 886
- DATABASE WPI Section Ch, Week 9733 Derwent Publications Ltd., London, GB; Class M11, AN 97-362034 XP002094236 & RU 2 070 947 C (MALYSHEV V N) , 27. Dezember 1996

## Beschreibung

Die Erfindung betrifft ein Verfahren zum Erzeugen harter Oxidschichten an der Oberfläche eines Substrats auf Basis von Leichtmetallen, wie Aluminium, Titan, Magnesium, Beryllium und/oder deren Legierungen, bei welchem das Substrat als eine Elektrode zusammen mit einer Gegenelektrode in eine Elektrolytflüssigkeit eingetaucht und mit einer elektrischen Spannung einer elektrischen Spannungsquelle beaufschlagt wird, wobei der für die Ausbildung der Oxidschicht vorgesehene Dickenbereich des Substrats ausgehend von seiner der Gegenelektrode benachbarten Oberfläche mittels sich ausbildender Entladungsströme zwischen dem Substrat und der Gegenelektrode auf eine Temperatur oberhalb der Schmelztemperatur des Substrats erwärmt und dabei die Oxidschicht gebildet wird.

Die Verwendung von Leichtmetallen, wie Aluminium, Titan, Magnesium, Beryllium, Duraluminium und anderen sowie ihren Legierungen als Werkstoffe sind in verschiedenen Gebieten der Technik bekannt. Durch Beeinflussung der jeweiligen Charakteristiken der Werkstoffe können diese beispielsweise zur Verminderung der Konstruktionsmasse, der Erhöhung des Wirkungsgrades von Maschinen und Motoren, der Erhöhung Ihrer Festigkeit und Lebensdauer und auch der Verminderung von Metallverbrauch eingesetzt werden.

Beispielsweise ist es bekannt, Aluminiumlegierungen zu verstärken, in dem sie thermisch abgehärtet werden, in heißem Wasser gealtert werden, mittels Ultraschall, elektrischem Strom und Elektrohydrowellen deformiert werden und nachfolgend mit flüssigem Stickstoff gekühlt werden. Nachteilig bei diesen bekannten Verfahren ist der große Zeitaufwand sowie die hohen Kosten für die Ausrüstung, denen nur eine relativ kleine Erhöhung der Festigkeit und Härte sowie keine Korrosionsschutzerhöhung des Werkstoffes gegenüberstehen und so die Möglichkeit dieses Verfahrens erheblich einschränken.

Auch ist es bekannt, eine Verstärkungsschicht mittels Plasmaspritzen von Teilchen anderer Metalle auf der Oberfläche eines Leichtmetallwerkstoffes hervorzurufen. Hierbei sind zwar die Möglichkeiten der Beeinflussung der Eigenschaften des Leichtmetallwerkstoffes größer, jedoch steht diesem Vorteil ein noch höherer Kostenaufwand für die Ausrüstung gegenüber.

Weiterhin ist es bekannt, mittels elektrochemischer Verfahren, beispielsweise der sogenannten anodischen Oxidation, auf das Substrat aus einem Leichtmetall einzuwirken (Römpp Chemie Lexikon, 9. Auflage, Band 1, Seite 197, Georg Thieme Verlag Stuttgart/New York). Diese Einwirkung ruft eine strukturelle Veränderung der Oberschichten des Substrats in eine andere, beispielsweise festere Struktur aufgrund von Oxidationserscheinungen hervor. Nachteilig bei diesem Verfahren ist jedoch der große Energieverbrauch, vor allem elektrischer Strom, die nur mittelmäßigen Adhäsionseigenschaften der harten Oxidschicht an ihrem Untergrund, die Sprödigkeit und schlechte Vibrationsstandfestigkeit der Oxidschicht.

Aus der SU 1 783 004 A1 ist ein gattungsgemäßes Verfahren zur Erhöhung des Korrosionsschutzes und zur Bildung einer dekorativen Außenschicht bei Ventilmetallen und ihren Legierungen, vorzugsweise Aluminium und Titan bekannt, bei dem mittels eines kontinuierlichen Gleichstroms in einem Elektrolyten das Substrat mittels sich ausbildender Mikrolichtbögen erwärmt und hierbei die Oxidschicht ausgebildet wird. Hierzu wird die Spannung einer elektrischen Gleichspannungsquelle bei konstanter Stromdichte bis zur Ausbildung der Beschichtung infolge der Mikrolichtbögen erhöht, über einen Zeitraum von 1 bis 3 min auf diesem Wert gehalten und nachfolgend in einer vorgegebenen Geschwindigkeit auf 0 vermindert, wodurch im Ergebnis eine gegen Korrosion schützende dünne Oxidschicht an der Oberfläche des Substrats erhalten wird, die darüber hinaus einen vorteilhaften optischen Eindruck hinterläßt. Nachteilig bei diesem bekannten Verfahren ist es, daß zum einen ein hoher Energieaufwand benötigt wird und während der Einwirkung der elektrischen Spannung und der Mikrolichtbögen auf die Oberfläche des Substrates dieses bis in Temperaturbereiche oberhalb der Verdampfungstemperatur desselben überhitzt wird, wodurch es zu Mikroexplosionen auf der Oberfläche des Substrates kommt. Diese Mikroexplosionen sprengen die vorangehend ausgebildete Oxidschicht ab, so daß der Vorgang des Ausbildens der Oxidschicht von neuem beginnen muß und im Ergebnis eine ungleichmäßige und unregelmäßige Oxidschicht auf dem Substrat erhalten wird, die eine ungenügende Adhäsion zum Substrat aufweist und wegen ihrer Unregelmäßigkeit mit großem Aufwand nachbearbeitet werden muß.

Die geringe Adhäsion zum Substrat ergibt sich auch daraus, daß infolge des Überhitzens des Substrates fast die gesamte vorgesehene Schichtdicke aus Oxidteilchen besteht und nur wenige Metallteilchen beinhaltet, die die Adhäsion zum Substrat sicherstellen können. Weitere Nachteile des bekannten Verfahrens ergeben sich daraus, daß der verwendete Elektroyt aufgrund seines Gehaltes an Na₂WO₄ stark toxisch ist und eine leistungsmäßige Begrenzung aufgrund der notwendigen Verwendung von Gleichstrom gegeben ist. Mit dem bekannten Verfahren gelingt es nicht, gleichmäßige saubere Oxidschichten auf der Oberfläche des Substrates auszubilden, da die aufgrund der sich ausbildenden Mikrolichtbögen entwickelnden Temperaturen auf der Oberfläche des Substrates während der Einwirkungszeit der Mikrolichtbögen nicht regelbar und nicht beherrschbar sind, so daß Überhitzungen mit den bereits beschriebenen Nachteilen nicht verhindert werden können.

Aufgabe der Erfindung ist es daher, ein Verfahren zum Erzeugen harter Oxidschichten an der Oberfläche eines Substrats auf Basis von Leichtmetallen vorzuschlagen, die sich durch besondere Festigkeit, Härte, Glattheit und gute Adhäsionseigenschaften zum Substrat auszeichnen und in einem sehr breiten Dickenspektrum von extrem dünnen Beschichtungen bis zu dicken und sehr widerstandsfähigen Beschichtungen bei gleichzeitig verringertem Aufwand und niedrigen Kosten ausgebildet werden können.

Diese Aufgabe wird erfindungsgemäß mit einem Verfahren gemäß den kennzeichnenden Merkmalen des Patentanspruches 1 gelöst.

Vorteilhafte Ausgestaltungen der Erfindung sind den Unteransprüchen entnehmbar.

Zur Lösung der gestellten Aufgabe schlägt die Erfindung vor, daß das Substrat mit einer pulsierenden Spannung, die durch taktweise aufeinanderfolgendes hochfrequentes Ein- und Ausschalten der elektrischen Spannungsquelle erzeugt wird, beaufschlagt wird, und die Zeitdauer der Einschalttakte und die Leistung der elektrischen Spannungsquelle so bemessen werden, daß der für die Oxidbildung vorgesehene Dickenbereich des Substrates während der Zeitdauer eines jeden Einschalttaktes auf eine Temperatur erwärmt wird, die zwischen der Schmelz- und Verdampfungstemperatur des Substrates liegt.

Die Erfindung lehrt, daß durch Verwendung der vorgeschlagenen pulsierenden hochfrequenten Spannung eine sehr gleichmäßige und hochwiderstandsfähige Oxidschicht auf der Oberfläche des Substrats ausgebildet werden kann. Im Gegensatz zu den bekannten Verfahren gelingt es mit dem erfindungsgemäßen Verfahren problemlos, die durch die Entladungsströme hervorgerufenen Erwärmungen des Substrates exakt zu kontrollieren und Überhitzungen mit den dadurch hervorgerufenen Mikroexplosionen zu vermeiden, da es lediglich notwendig ist, die Zeitdauer der Einschalttakte der elektrischen Spannungsquelle, die mit hoher Frequenz aufeinanderfolgen und die Leistung der elektrischen Spannungsquelle so zu bemessen, daß der für die Oxidbildung vorgesehene Dickenbereich des Substrates auf eine Temperatur erwärmt wird, die höher als die Schmelztemperatur, jedoch zuverlässig niedriger als die Verdampfungstemperatur des Substrates ist.

Infolge dieser Erwärmung des Substrats im vorgesehenen Dickenbereich oberhalb der Schmelztemperatur und unterhalb der Verdampfungstemperatur wird die erwünschte Umwandlung des Leichtmetalls in eine Oberschicht, die gänzlich aus Metall- und Oxidteilchen besteht, hervorgerufen und es bildet sich eine harte, feste und vollständig geschlossene Hülle um das Substrat. Infolge der erfindungsgemäß vorgeschlagenen hochfrequenten taktweise aufeinanderfolgenden pulsierenden Beaufschlagung des Substrats mit elektrischer Spannung geschieht diese Erwärmung und Umwandlung der Oberschicht jedoch mit wesentlich vermindertem Energieverbrauch und ruft darüber hinaus auch eine deutliche Verbesserung der Qualität der Beschichtung hervor.

Die Dicke der sich ausbildenden Oxidschicht auf der Oberfläche des Substrats kann auf einfache Weise über die Einstellung der Leistung der elektrischen Spannungsquelle reguliert werden. Bei nur geringer Leistung der elektrischen Spannungsquelle bildet sich eine sehr dünne Oxidschicht auf der Oberfläche aus, wobei noch keine Funkenentladungen oder Mikrolichtbögen an der Oberfläche des Substrates erzeugt werden. Bei einer Erhöhung der Stromleistung bilden sich zunächst Funkenentladungen und bei weiterer Erhöhung Mikrolichtbögenentladungen an der Oberfläche des Substrates, die zwischen dem Elektolyt und dem als Elektrode wirkenden Substrat ausgebildet werden und die Erhitzung des Substrates bewirken.

Die Funkenentladungen oder Mikrolichtbögen erwärmen das Substrat lediglich bereichsweise in ihrem jeweiligen Auftreffbereich auf der Oberfläche und im vorgesehenen Dickenbereich, wobei diese Auftreffbereiche der Funkenentladungen oder Mikrolichtbögen mehr oder weniger zufällig auf der Oberfläche des Substrats ausgebildet werden und dort bereichsweise begrenzt die Umwandlung der Oberschicht und Ausbildung der harten Oxidschicht bewirken. Mit steigender Stromleistung der elektrischen Spannungsquelle wird auch der Dickenbereich für die Umwandlung des Substrates in die Oxidschicht größer. Ebenso steigt die Temperatur innerhalb der Funkenentladungen und Mikrolichtbögen in Abhängigkeit von der Stromleistung an.

Durch das erfindungsgemäß vorgeschlagene taktweise aufeinanderfolgende hochfrequente Ein- und Ausschalten der elektrischen Spannungsquelle werden beim erfindungsgemäßen Verfahren die gerade auf der Oberfläche entstehenden Funkenentladungen oder Mikrolichtbögen, die jeweils einen eng begrenzten Bereich des Substrats in der gewünschten Dicke auf eine Temperatur oberhalb der Schmelztemperatur erwärmen und dort die Oxidation und Erzeugung der harten Oxidschicht hervorrufen, bereits nach kurzer Zeit wieder unterbrochen, so daß in diesem punktuellen Bereich zwar eine Erwärmung oberhalb der Schmelztemperatur und damit einhergehend die Umwandlung in die Oxidschicht erfolgt, eine Überhitzung oberhalb der Verdampfungstemperatur jedoch vermieden wird. Beim nächsten Einschalttakt bilden sich die Funkenentladungen oder Mikrolichtbögen an anderen zufälligen Stellen auf dem Substrat aus, so daß infolge der pulsierenden Spannung im Ergebnis eine äußerst dichte harte und widerstandsfähige Oxidschicht auf dem Substrat ausgebildet wird, wenn eine genügend hohe Anzahl von an unterschiedlichen Stellen auf der Oberfläche des Substrates aufgetretener Funkenentladungen oder Mikrolichtbögen infolge der hochfrequenten pulsierenden Spannung ausgebildet worden sind und jeweils bereichsweise die Umwandlung des Substrats in die Oxidschicht bewirkt haben.

Hierdurch wird eine wesentlich bessere Verbindung der erfindungsgemäß hergestellten Oxidschicht mit dem Substrat bei gleichzeitig höherer Härte, Temperaturfestigkeit, geringerem Reibungskoeffizienten und wesentlich geringerem Energieverbrauch im Vergleich zu den herkömmlich erzeugten Oxidbeschichtungen hervorgerufen.

In einer vorteilhaften Ausführungsform der Erfindung wird der vorgegebene Dickenbereich des Substrats nicht nur auf eine Temperatur oberhalb der Schmelztemperatur, sondern sogar bis auf eine Temperatur knapp unterhalb der Verdampfungstemperatur erwärmt, was der Bildung einer äußerst harten und dicken Oxidschicht auf dem Substrat besonders dienlich ist.

Dabei sieht eine bevorzugte Ausführungsform der Erfindung vor, daß die Leistung der elektrischen Spannungsquelle so bemessen wird, daß sie bei kontinuierlicher Beaufschlagung des Substrats im vorgesehenen Dickenbereich für eine Erwärmung desselben bis zur Verdampfungstemperatur ausreichend ist. Dies würde jedoch bei kontinuierlicher Beaufschlagung des Substrats mit der Leistung der elektrischen Spannungsquelle eine Erwärmung des Substrats bis zur Verdampfungstemperatur bewirken, in deren Folge sich Mikroexplosionen auf der Oberfläche des Substrates ereignen, bei denen das flüssige Metall von den Oberflächen des Substrats weggeschleudert wird und der Prozeß der Ausbildung der Oxidschicht von neuem beginnen müßte. Bei derartigen Mikroexplosionen wird die Oxidschicht völlig vernichtet und für die Ausbildung der Oxidschicht an dieser Stelle ist eine neue Energiezufuhr erforderlich, was bei den bekannten Verfahren die Hauptursache für deren erhöhten Energieverbrauch ist. Es ist daher ein wesentliches Merkmal der Erfindung, daß diese Erzeugung von Mikroexplosionen infolge einer Erwärmung des Substrats oberhalb der Verdampfungstemperatur zuverlässig verhindert wird. Dies wird erfindungsgemäß auf einfache Weise dadurch erreicht, daß die Erwärmung des Substrats bei der hohen Leistung der elektrischen Spannungsquelle dadurch begrenzt wird, daß die Zeitdauer der Einschalttakte der elektrischen Spannungsquelle soweit verkürzt wird, bis der vorgesehene Dickenbereich lediglich auf eine zwischen der Schmelz- und Verdampfungstemperatur des Substrats liegende Temperatur erwärmt wird.

Auf diese Weise kann durch entsprechende Einstellung der Leistung und der Zeitdauer der Einschalttakte der elektrischen Spannungsquelle das Substrat im vorgesehenen Dickenbereich bis knapp unterhalb der Verdampfungstemperatur erwärmt werden, ohne daß die Gefahr von Mikroexplosionen besteht.

Diese entsprechende Einstellung der Leistung und Dauer der Einschalttakte der elektrischen Spannungsquelle wird beim erfindungsgemäßen Verfahren auf einfache Weise dadurch realisiert, daß die Leistung der elektrischen Spannungsquelle und die Zeitdauer eines Einschalttaktes beispielsweise rechnerisch oder auch experimentell in der Weise ausgewählt werden, daß bei Beaufschlagung des Substrats in einem Probebereich die Verdampfungstemperatur im vorgesehenen Dickenbereich erreicht und Mikroexplosionen an der Oberfläche des Substrates erzeugt werden. Nachfolgend wird die Zeitdauer eines einzelnen Einschalttaktes der pulsierenden Spannung bei unveränderter Leistung der elektrischen Spannungsquelle soweit verkürzt, daß keine Mikroexplosionen an der Oberfläche des Substrates mehr auftreten, wobei vorzugsweise diese Verringerung der Zeitdauer der einzelnen Einschalttakte um einen möglichst kleinen Zeitabschnitt durchgeführt wird, so daß ein Zustand erreicht wird, bei dem gerade keine Mikroexplosionen mehr auftreten. Die dann an der Oberfläche des Substrates erzeugte Temperatur liegt minimal unterhalb der Verdampfungstemperatur, die die Obergrenze der zulässigen Werte der Zeitdauer der Einschalttakte der pulsierenden Spannungsquelle darstellt.

Demzufolge liegen der Erfindung drei Hauptfaktoren zugrunde:
1. Die Beaufschlagung des Substrates mit einer hochfrequenten pulsierenden Spannung durch taktweise aufeinanderfolgendes Ein- und Ausschalten der elektrischen Spannungsquelle,
2. die optimale Einstellung der Leistung und Zeitdauer der Einschalttakte der elektrischen Spannungsquelle, um Mikroexplosionen zu verhindern und
3. eine kontinuierliche oder schrittweise Erhöhung der Leistung der elektrischen Spannungsquelle, mit der parallel eine Erhöhung der erzeugten Oxidschichtdicke einhergeht.

Alle diese drei Faktoren gewährleisten eine hohe Qualität der erzeugten Oxidschicht und deren minimalen Energieverbrauch.

Die Erfindung lehrt, daß unter der Wirkung der drei genannten Hauptfaktoren der Prozeß der Oxidation infolge des Schmelzens des Substrates im vorgesehenen Dickenbereich in kürzerer Zeit vonstatten geht, die Gleichmäßigkeit der Beschichtung verbessert und die Überhitzung des Substrat mit größerer Sicherheit vermieden wird, als es bei kontinuierlicher Beaufschlagung des Substrats, z. B. mit einem konstanten Gleichstrom und mit einer kleineren Stromleistung der Fall wäre.

Beim erfindungsgemäßen Verfahren kann die optimale Abstimmung der Leistung und der Zeitdauer der Einschalttakte der elektrischen Spannungsquelle auf einfache Weise festgestellt werden.

In Abhängigkeit von der rechnerisch oder experimentell ermittelten optimalen Leistung der elektrischen Spannungsquelle, die beispielsweise so bemessen sein kann, daß sie bei kontinuierlicher Beaufschlagung des Substrats eine Erwärmung des vorgesehenen Dickenbereichs desselben bis oberhalb der Verdampfungstemperatur bewirken würde, bestimmt sich die optimale Zeitdauer eines Einschalttaktes der elektrischen Spannungsquelle durch eine Funktion, die von einem unteren und einem oberen Grenzwert eingegrenzt wird. Der untere Grenzwert, d. h. die minimal zulässige Zeitdauer eines Einschalttaktes ergibt sich dadurch, daß bei voreingestellter Leistung der elektrischen Spannungsquelle während der Dauer eines Einschalttaktes gerade die Schmelztemperatur des Substrates im vorgesehenen Dickenbereich erreicht und infolge dessen die Umwandlung des Substrates in die gewünschte Oxidschicht stattfindet. Der obere Grenzwert, d. h. die maximal zulässige Zeitdauer eines Einschalttaktes ergibt sich dadurch, daß bei vorgegebener Leistung der elektrischen Spannungsquelle gerade noch keine Mikroexplosionen auf der Oberfläche des Substrates auftreten, so daß das Substrat im vorgesehenen Dickenbereich auf eine knapp unterhalb der Verdampfungstemperatur liegende Temperatur erwärmt wird und eine sehr widerstandsfähige und dicke Oxidschicht ausgebildet wird.

Je nach gewünschter Härte und Dicke der Oxidschicht kann sodann bei gegebener Leistung der elektrischen Spannungsquelle die Zeitdauer der Einschalttakte entsprechend bemessen werden.

Sollen mit dem erfindungsgemäßen Verfahren Oxidschichten größerer Dicke auf dem Substrat ausgebildet werden, wird vorgeschlagen, die Leistung der elektrischen Spannungsquelle während der Bearbeitungsdauer zu vergrößeren. Auf diese Weise wird, ausgehend von der Oberfläche des Substrats, die Umwandlung des vorgesehenen Dickenbereichs in die harte Oxidschicht in das Innere des Substrats vorangetrieben, wobei wiederum die erfindungsgemäß vorgeschlagene pulsierende Spannung durch taktweise aufeinanderfolgendes Ein- und Ausschalten der elektrischen Spannungsquelle mit hoher Frequenz zur Anwendung kommt. Die harte Oxidschicht bildet sich dabei zunächst auf der Oberfläche des Substrats bei jedem Einschalttakt im Auftreffbereich des Entladungsstromes, z. B. Funkenentladung oder Mikrolichtbogen aus und wird so bereichsweise bis zur Ausbildung einer geschlossenen Oxidschicht an der Oberfläche des Substrates aneinandergefügt. Diese Oxidschicht wirkt nachfolgend als elektrischer Isolator, zu dessen Überwindung und damit zum Vordringen in tiefere Schichten eine höhere Leistung bzw. eine höhere Durchschlagspannung der elektrischen Spannungsquelle und gegebenenfalls auch eine verlängerte Dauer der Einschalttakte derselben nötig ist.

Mit dem erfindungsgemäßen Verfahren ist es sodann möglich, Oxidschichten in einer Dicke von 7 bis 1000 µm auf der Oberfläche eines Substrates, je nach angelegter Leistung und Zeitdauer der Einschalttakte sowie den Materialeigenschaften des verwendeten Substrates zu erzeugen. Die Durchschlagspannung der Oxidschicht erhöht sich dabei mit der Vergrößerung der Schichtdicke der ausgebildeten harten Oxidschicht.

Gemäß einer Ausführungsform des erfindungsgemäßen Verfahrens beträgt die Zeitdauer der Einschalttakte der elektrischen Spannungsquelle 5 · 10⁻⁶ s bis 150 · 10⁻⁶ s bei einer Leistung der elektrischen Spannungsquelle von 1 bis 1000 kW in Abhängigkeit von der Dicke der ausgebildeten Oxidschicht und den Materialeigenschaften des jeweiligen Substrates. Die Erfindung ist hierbei jedoch nicht auf diese angegebenen Bereiche beschränkt.

Die Zeitdauer eines zwischen zwei aufeinanderfolgenden Einschalttakten liegenden Ausschalttaktes wird so eingestellt, daß sie etwa die ein bis dreifache Zeitdauer eines Einschalttaktes beträgt.

Die infolge der pulsierenden hochfrequenten Spannung auf das Substrat einwirkende Stromdichte beträgt etwa 2 bis 500 A/m².

Als Elektrolytflüssigkeit sind verschiedene stromleitende Flüssigkeiten verwendbar, wobei beispielhaft eine 0,1 bis 0,3 %ige Kaliumhydroxidlösung vorteilhaft einsetzbar ist, es können jedoch auch verschiedene andere Arten von Elektroyten verwendet werden.

Die Oxidschicht wirkt nicht nur als elektrischer Isolator mit hoher Durchschlagspannung, sondern auch als ein Wärmeisolator. Hieraus erklärt sich auch, warum zum Vordringen in größere Tiefen des Substrates nicht nur die Leistung der elektrischen Spannungsquelle infolge der höheren Durchschlagspannung gesteigert werden muß, sondern gegebenenfalls auch die Zeitdauer der Einschalttakte verlängert werden muß, um die hohe Wärmeisolationsfähigkeit der bereits gebildeten äußeren Oxidschicht zu überwinden.

Die Erfindung wird nachfolgend in weiteren Einzelheiten anhand eines Ausführungsbeispieles erläutert.

Als Substrat für die Ausbildung von harten Oxidschichten gemäß dem erfindungsgemäßen Verfahren werden als Substrate Bleche aus Duraluminium D-16 (AlCuMg) einer Dicke von 0,25 bis 2,5 mm und einer für die Bearbeitung vorgesehenen Fläche von 50 bis 500 cm² beispielhaft verwendet. Diese Bleche werden in einem Elektrolytbehälter aus rostbeständigem Stahl, der mit wassergelöstem Kaliumhydroxid (KOH) in einer Konzentration von 0,2 % als Elektrolytflüssigkeit gefüllt ist, eingehängt. Dieses Einhängen erfolgt mittels Halterungen, die durch Isolatoren elektrisch gegenüber den Wänden des Behälters isoliert sind. Die zu bearbeitetenden Bleche dienen als eine Elektrode und eine weitere Gegenelektrode wird benachbart zu den als Elektrode dienenden Blechen ebenfalls in dem Elektrolyten eingetaucht und sodann die Elektrode und die Gegenelektrode mit einer geeigneten elektrischen Spannungsquelle verbunden. Der Anlagenaufbau unterscheidet sich somit bis hier nicht wesentlich von den bekannten, beispielsweise anodischen Oxidationsverfahren, wie sie eingangs bereits erwähnt worden sind.

Erfindungsgemäß werden die zu bearbeitenden Bleche nun diskontinuierlich mit einer hochfrequenten pulsierenden Spannung, die durch taktweise aufeinanderfolgendes Ein- und Ausschalten der elektrischen Spannungsquelle erzeugt wird, beaufschlagt und hierbei durch die sich ausbildenden Entladungsströme zwischen dem Substrat und der Gegenelektrode erwärmt. Bei jedem Einschalttakt, d. h. der Beaufschlagung der Elektrode und damit des Substrats mit elektrischer Spannung bilden sich zwischen den Flüssigkeitsteilchen des Elektrolyten und den Oberflächen der zu bearbeitenden Substrate Mikrolichtbögen, in deren Folge die Oberflächen des Substrates erhitzt und der in dem für die Ausbildung der Oxidschicht vorgesehenen Dickenbereich des Substrates aufgeschmolzen werden. Durch diesen Schmelzprozeß wird eine Oxidation des Dickenbereiches hervorgerufen, in deren Folge sich die gewünschte harte Oxidschicht ausbildet. Diese Oxidschicht wird dabei bereichsweise jeweils im Auftreffbereich eines Mikrolichtbogens an der Oberfläche des Substrates während der Zeitdauer eines Einschalttaktes infolge der punktuellen Erhitzung durch den auftreffenden Mikrolichtbogen ausgebildet, wobei die Position dieses Auftreffbereiches auf der Oberfläche des Substrates mehr oder weniger zufällig ist. Beim nachfolgenden Einschalttakt der pulsierenden Spannung bildet sich der Auftreffbereich eines einzelnen neuen Mikrolichtbogens an einer anderen Stelle auf der Oberfläche des Substrats aus, so daß bei genügend häufiger Aneinanderreihung einzelner hochfrequenter Einschalttakte die gesamte Oberfläche des Substrats durch Aneinanderreihung der Auftreffbereiche der sich während der Einschalttakte ausbildenden Mikrolichtbögen mit einer gleichmäßigen Oxidschicht versehen ist, die außergewöhnlich hart und gleichmäßig ist sowie eine hohe Adhäsion zum Substrat aufweist. Diese Oxidschicht besitzt eine zellulare Struktur und weist im vorliegend behandelten Beispiel von Duraluminium D-16 als Substrat die Oxide in Form von α- und γ-Phasen des Al₂O₃ auf, wobei die hochfeste Phase α-Al₂O₃ in der sich während der Oxidation bildenden Matrix aus γ-Al₂O₃ und in Verbindungen der Elemente des Duraluminium D-16 verteilt und eingebaut wird.

Um die benötigte elektrische Energie zu verringern und die Qualität der erzielbaren Oxidschicht zu erhöhen, wird das Verfahren so durchgeführt, daß die Temperatur des für die Ausbildung der Oxidschicht vorgesehenen Dickenbereiches des Substrats zwischen der Schmelztemperatur und der Verdampfungstemperatur desselben liegt. Dazu wird die Leistung der elektrischen Spannungsquelle so bemessen, daß sie bei kontinuierlicher Beaufschlagung des Substrats den vorgesehenen Dickenbereich desselben bis zur Verdampfungstemperatur erwärmen würde, was beispielsweise rechnerisch oder anhand von Erfahrungswerten ermittelt werden kann.

Wenn nun die Dauer der Einschalttakte der pulsierenden elektrischen Spannungsquelle zu groß bemessen wird und die Einschalttakte in hoher Frequenz aufeinanderfolgend auf das Substrat einwirken, wird die Erwärmung des vorgesehenen Dickenbereichs des Substrats bishin zur Verdampfungstemperatur bei dieser eingestellten Leistung der elektrischen Spannungsquelle tatsächlich erreicht, so daß sich Mikroexplosionen ereignen und das flüssige Metall, aus dem sich die Oxidschicht bilden soll, von den Oberflächen des Substrats weggeschleudert wird und der Prozeß der Umwandlung in die Oxidschicht von neuem beginnen muß. Dieses Auftreten der Mikroexplosionen ist leicht visuell oder mit Hilfe geeigneter Geräte mit ausreichender Präzision feststellbar.

Nun wird die Dauer der Einschalttakte der elektrischen Spannungsquelle soweit verringert, daß infolge der pulsierenden Spannung keine Mikroexplosionen während eines Einschalttaktes mehr auftreten. Das Erhitzen des Substrats erfolgt somit auf eine Temperatur knapp unterhalb der Verdampfungstemperatur, was einfach durch eine entsprechende Verringerung der Zeitdauer der hochfrequent aufeinanderfolgenden Einschalttakte begrenzt wird.

Bei dieser Einstellung der elektrischen Leistung und der Zeitdauer der Einschalttakte entstehen an der Oberfläche des Substrates keine Mikroexplosionen mehr, jedoch verläuft der Prozeß des Aufschmelzens und der Oxidation des vorgesehenen Dickenbereiches des Substrats mit optimal hoher Geschwindigkeit, die Vermischung der Oxid- und Metallteilchen erfolgt sehr gleichmäßig und eine Überhitzung der mittleren Schichten des Substrates wird vermieden, so daß auch eine hohe Dimensionsstabilität des Substrates gewährleistet ist. Gleichzeitig wird der Energieverbrauch vermindert und die eingesetzte Energie optimal in die Umwandlung des vorgesehenen Dickenbereiches des Substrates in eine harte Oxidschicht eingesetzt.

Die Erfindung lehrt somit, daß es bei einer genügend großen Leistung der Spannungsquelle, die für die Erreichung der Verdampfungstemperatur theoretisch ausreichend ist, sehr einfach durch Reduzieren der Zeitdauer der Einschalttakte der pulsierenden hochfrequenten Spannung festlegbar ist, wann die Obergrenze der zulässigen Zeitdauer der Einschalttakte erreicht ist, nämlich genau dann, wenn gerade keine Mikroexplosionen an der Oberfläche des Substrats mehr auftreten.

Die auf diese Weise an der Oberfläche des Substrats ausgebildete harte Oxidschicht aus beispielsweise α- und γ-Phasen des Al₂O₃ beim hier beschriebenen Substrat aus Duraluminium D-16 ist ein Stromisolator und weist zusätzlich hohe Wärmeisolationseigenschaften auf. Aus diesem Grund muß die Leistung der elektrischen Spannungsquelle und auch die Zeitdauer der Einschalttakte der elektrischen Spannungsquelle erhöht werden, um ausgehend von der Oberfläche des Substrates auch in tiefere Lagen desselben vorzudringen und hier ebenfalls Oxidschichten zu bilden, wenn die Bildung einer besonders dicken Oxidschicht auf dem Substrat gewünscht ist. Im vorliegenden Fall der Beschichtung von Duraluminium D-16-Blechen wird eine Dicke der Oxidschicht von 7 µm bis 150 µm erreicht. Hierfür beträgt die Dauer der Einschalttakte etwa 1 · 10⁻⁵ Sekunden, wobei die Leistung der Spannungsquelle von 900 kW auf 1000 kW gesteigert wird.

Die Dauer des gesamten Umwandlungsprozesses des vorbestimmten Dickenbereiches des Substrats in eine harte Oxidschicht kann je nach Anwendungsfall von einigen wenigen Minuten bishin zu etwa 3 h andauern. Während dieser Zeit wirkt die pulsierende hochfrequente Spannung auf das Substrat ein, indem die elektrische Spannungsquelle taktweise aufeinanderfolgend mit der hohen Frequenz ein- und ausgeschaltet wird.

Die erhaltenen und mit einer harten Oxidschicht an der Oberfläche versehenen Bleche weisen gegenüber dem Ausgangsmaterial Duraluminium D-16 wesentlich verbesserte Eigenschaften auf, die nachstehend wiedergegeben sind.
Dicke der Verstärkungsschichten 7 bis 1000 µm
Rockwellhärte: bis 120
Reibungskoeffizient 0,016 bis 0,020 (nach Abschleifen)
Adhäsion zum Ausgangssubstrat: 600 bis 2500 kg/m²
Durchschlagspannung: 100 bis 1500 Volt
Warmfestigkeit der Oxidschicht: 1200 bis 2500 °C.

Die derart mit einer harten Oxidschicht verstärkten Duraluminiumbleche gemäß dem vorliegenden Ausführungsbeispiel weisen ein Elastizitätsmodul (Jung) beim Biegen auf, das mindestens 3 x größer als das Jung-Modul des Ausgangsmaterials ist und wirken als elektrischer Isolierkörper. Die Oxidschicht bewirkt dabei einen hohen Korrosionsschutz des Leichtmetalls auch ohne Grundierung und Farbanstrich sowie die Möglichkeit, verschiedene Farben ohne Anstrich zu erhalten. Die erhaltene Oxidschicht nähert sich in ihrer Härte etwa den Metallen der Wolfram-Gruppe.

Diese überaus positiven Eigenschaften werden mit einem wesentlich verringerten Energieaufwand erreicht, wie sich aus dem nächsten Beispiel ergibt.

Für die Ausbildung einer harten Oxidschicht auf einem Duraluminiumblech gemäß dem ersten Beispiel in einer Dicke von 150 µm ist gemäß dem erfindungsgemäßen Verfahren eine Bearbeitungszeit von etwa 0,8 h bei zunehmender Leistung der elektrischen Spannungsquelle von 900 kW bishin zu einer maximalen Leistung von 1000 kW erforderlich. Hieraus ergibt sich ein ermittelter Energieaufwand von etwa 5 kW/µm für eine Erzeugung harter Oxidschichten gemäß dem erfindungsgemäßen Verfahren.

Bei den bekannten elektrochemischen Verfahren hingegen, bei denen das Substrat konstant mit einer elektrischen Spannung anstelle der erfindungsgemäß hochfrequent pulsierenden Spannung beaufschlagt wird, ist beispielsweise zur Erzielung einer harten Oxidschicht einer Dicke von nur 130 µm eine Zeit von etwa 7 h zu veranschlagen, wenn 700 A/m² und 500 Volt der elektrischen Spannungsquelle angelegt werden. Hieraus errechnet sich ein effektiver Energieaufwand dieses bekannten Verfahrens zu 700 x 500 x 7 : 130 = 18,85 kW/µm, was mehr als das Dreifache im Vergleich zum erfindungsgemäßen Verfahren ist.

Gleichzeitig weist jedoch die nach dem erfindungsgemäßen Verfahren hergestellte Oxidschicht eine wesentlich höhere Adhäsion, Härte und Festigkeit und bedeutend geringere Porosität auf.

Das Endprodukt ist ökologisch unbedenklich und rein, denn die ausgebildete Oxidschicht stellt eine keramische Schicht dar, die eine feste und vollständig geschlossene Hülle um das bearbeitete Substrat bildet.

Darüber hinaus erfährt das behandelte Substrat keine wesentliche Dimensionsveränderung, da die Oxidschicht nicht, wie beispielsweise beim Plasmaspritzen auf die Oberfläche des Substrats zusätzlich aufgebracht, sondern im Substrat im vorgegebenen Dickenbereich selbst gebildet wird.

Bei dieser Bildung gemäß dem erfindungsgemäßen Verfahren ergibt sich die gewünschte Oxidschicht im Inneren des Substrates in etwa zwei Drittel der Gesamtdicke der insgesamt ausgebildeten Oxidschicht (harter und gewünschter Teil der Oxidschicht) und zusätzlich eine etwa ein Drittel der Gesamtdicke der Oxidschicht ausmachende äußere Oxidschicht, die sich außenseitig auf dem Werkstück ablagert (nicht harter unerwünschter Teil der Oxidschicht), so daß das Ausmaß des Werkstückes um diese Größe von etwa ein Drittel der gesamten ausgebildeten Oxidschicht nach der Bearbeitung vergrößert ist. Diese zusätzlich auf der Oberfläche des Substrats sich ausbildenden unerwünschten und geringere Härte aufweisende Oxide werden z. B. durch Schleifen nachträglich auf einfache Weise entfernt. Dadurch erhält das Werkstück seine ursprünglich gegebenen Ausmaße zurück und erhält die gewünschte Oberfläche mit einer harten Oxidschicht, die darüber hinaus einen äußerst geringen Reibungskoeffizienten aufweist, da die harte Oxidschicht nur eine geringe Porosität aufweist.

Eine mögliche Verwendung des erfindungsgemäßen Verfahrens mit sehr hoher Effektivität ergibt sich, wenn Duraluminiumbleche, z. B. im Flugzeugbau zusammengeklebt werden sollen, was aufgrund der hohen Adhäsion der Oxidschichten zum Substrat besonders gut durchführbar ist. Darüber hinaus kann die nach dem erfindungsgemäßen Verfahren ausgebildete harte Oxidschicht anstatt einer herkömmlichen Grundierung verwendet werden, die ebenfalls insbesondere im Flugzeugbau bisher notwendig ist. In beiden Fällen ergibt sich eine wesentliche Gewichtsverminderung der Konstruktionen und Erhöhung ihrer Lebensdauer. Zu diesen Zwecken ist es ausreichend, sehr dünne Oxidschichten bis zu 10 µm auszubilden.

Für den Korrosionsschutz der nach dem erfindungsgemäßen Verfahren mit einer harten Oxidschicht versehenen Substrate auf Basis von Leichtmetallen und zur Erhöhung der Verschleißstandfestigkeit werden jedoch dickere Oxidschichten mit einem entsprechend höheren Energieaufwand benötigt.

Eine besonders vorteilhafte Verwendung des erfindungsgemäßen Verfahrens ergibt sich in der Schaffung neuartiger Verbundwerkstoffe. Solche Verbunde können beispielsweise aus äußeren Blechen aus Leichtmetallen, die mit der erfindungsgemäßen Oxidbeschichtung versehen sind, bestehen, wobei die äußeren Schichten aus den Leichtmetallblechen mit einer inneren nichtmetallischen Schicht, z. B. aus Styropor-Komponenten unter Einsatz von Klebstoffen miteinander verbunden sind. Auch ist es möglich, als innere Schicht einen Hartschaumstoff zu verwenden, der ebenfalls mittels Klebstoffen mit den Leichtmetallblechen als äußere Schichten verbunden oder aufgrund von ihm eigenen Klebeeigenschaften mit diesen Leichtmetallblechen verbindbar ist. Auf diese Weise sind sehr günstige Eigenschaften derartiger Verbundwerkstoffe, wie sehr geringes spezifisches Gewicht von beispielsweise 0,3 bis 0,5 kg/dm³, hohe Zusammenklebefähigkeit und Korrosionsstandfestigkeit, verminderter Metallverbrauch, ausreichend hohe Wärmefestigkeit von beispielsweise 250 °C sowie besonders hohe Geräusch- und Wärmeisolierung erzielbar.

Die neuen Verbundwerkstoffe kann man mit großem Erfolg als leichte Konstruktionswerkstoffe im Flugzeugbau und besonders für Leicht- und Ultraleichtflugzeuge verwenden. Sie gewährleisten eine bedeutende Verminderung des Konstruktionsgewichtes sowie eine Verlängerung der Lebensdauer der Flugzeugkomponenten.

Eine weitere vorteilhafte Anwendung des erfindungsgemäßen Verfahrens ergibt sich im Motorenbau für Automobile und auch für Flugzeuge mit Kolbenmotoren, bei denen die Erhöhung der Lebensdauer besonders wichtig ist und auch eine Verminderung von Inertial- und Reibungskräften, des Treibstoffverbrauches und der Schadstoffemissionen erzielbar ist. Hier kann man die betreffenden Metallteile der Motoren aus Leichtmetallen, beispielsweise aus Aluminium fertigen und mit einer hochfesten Oxidbeschichtung nach dem erfindungsgemäßen Verfahren ausrüsten.

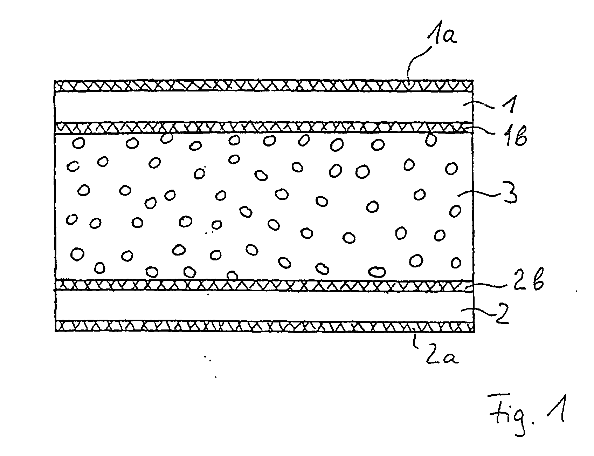

In der einzigen Figur der beigefügten Zeichnung ist eine Leichtbaukonstruktionsplatte oder ein entsprechendes Profil dargestellt. Sie hat zwei äußere Schichten aus Blechen aus Leichtmetall, z. B. Aluminium oder Titan, die mit Bezugszeichen 1, 2 versehen sind, und die beiderseits mit Oxidschichten 1a, 1b und 2a, 2b ausgebildet sind, die durch das erfindungsgemäße Verfahren erzeugt worden sind. Als innere Kernschicht 3 ist beispielsweise ein Hartschaumstoff oder Styropor vorgesehen, der mittels nicht dargestellter Klebeschichten mit den Blechen 1, 2 verbunden ist. Bei der Herstellung dieser Leichtbaukonstruktionsplatte spielt das erfindungsgemäße Verfahren der Oxidschichtbildung, die sehr hohe Adhäsion der hergestellten Oxidschicht zum Substrat und die Adhäsion der Oxidschicht zur Klebeschicht eine wesentliche Rolle bezüglich der erzielbaren hohen Festigkeitswerte, was bekannte Verfahren nicht gewährleisten können, insbesondere bezüglich der Adhäsion der Klebeschicht an Metallblechen.

Das erfindungsgemäße Verfahren der Erzeugung harter Oxidschichten an der Oberfläche eines Substrats auf Basis von Leichtmetallen bietet somit eine Vielfalt möglicher Anwendungsgebiete:
- Maschinenbau:: Kolbenmotorteile, Gleitlager, Stirnverdichter, Lehren, Korrosionsschutz,
- Flugzeugbau:: Beschichtungen für das Zusammenkleben von Aluminiumblechen und Ersatz von Grundierungen auf Oberflächen von Luftschraubenflügeln und Kompressorschaufeln, Herstellung von neuartigen Verbundwerkstoffen als Leichtbaukonstruktionsplatten,
- Chemie-maschinenbau:: Ausrüstungen für Arbeiten in aggressiven Medien,
- Medizin:: Medizinische Instrumente, Implantate, Prothesen und ihre Elemente,
- Elektronik:: Isolatoren, elektrische Widerstände,
- Technische Hydraulik:: Hydraulikzylinder, Stirnverdichter, Hydromotoren,
- Motorenbau:: Kraftelemente und reibende Teile für Kolbenmotoren, Pumpen, Kompressoren, gefertigt aus z. B. Aluminium mit harter Oxidschicht gemäß dem erfindungsgemäßen Verfahren: Kolben, Hülsen, Gleitlager, Ventile, Ventilbuchsen, Kühlungspumpen, Turbokompressoren.

## Patentansprüche

1. Verfahren zum Erzeugen von Oxidschichten an der Oberfläche eines Substrats auf Basis von Leichtmetallen, wie Aluminium, Magnesium, Beryllium und/oder deren Legierungen und/oder Titan, bei welchem das Substrat als eine Elektrode zusammen mit einer Gegenelektrode in eine Elektrolytflüssigkeit eingetaucht und mit einer pulsierenden elektrischen Spannung einer elektrischen Spannungsquelle, die durch taktweises hochfrequentes Ein- und Ausschalten der elektrischen Spannungsquelle erzeugt wird, beaufschlagt wird, wobei der für die Ausbildung der Oxidschicht vorgesehene Dickenbereich des Substrats ausgehend von seiner der Gegenelektrode benachbarten Oberfläche mittels sich ausbildender Entladungsströme zwischen dem Substrat und der Gegenelektrode erwärmt wird und wobei die Zeitdauer der Einschalttakte und die Leistung der elektrischen Spannungsquelle so bemessen werden, daß der für die Oxidbildung vorgesehene Dickenbereich des Substrats auf eine zwischen der Schmelz- und Verdampfungstemperatur des Substrats liegende Temperatur erwärmt wird und dabei die Oxidschicht gebildet wird, **dadurch gekennzeichnet, daß** das Verfahren bei Frequenzen der elektrischen Spannungsquelle von 1,6 bis 100 kHz, entsprechend einer Zeitdauer der elektrischen Spannungsquelle von 5·10⁻⁶ s bis 150·10⁻⁶ s und einer Zeitdauer eines zwischen zwei aufeinanderfolgenden Einschalttakten liegenden Ausschalttaktes in Höhe des ein- bis dreifachen der Zeitdauer eines Einschalttaktes, und bei einer Stromdichte auf dem von der elektrischen Spannungsquelle beaufschlagten Substrat von 2 bis 500 A/m² durchgeführt wird, wobei Oxidschichten in einer Dicke von 7 bis 1000 *µ*m an der Oberfläche des Substrats erzeugt werden.

2. Verfahren nach Anspruch 1, **dadurch gekennzeichnet, daß** die Leistung der elektrischen Spannungsquelle so bemessen wird, daß während der Zeitdauer eines Einschalttaktes Funkenentladungen oder Mikrolichtbögen an der Oberfläche des Substrates erzeugt werden, die bereichsweise in ihrem Auftreffbereich auf der Oberfläche das Substrat im vorgesehenen Dickenbereich erwärmen, wobei die Zeitdauer der Einschaltakte so bemessen Ist, daß die Erwärmung auf eine zwischen der Schmelz- und der Verdampfungstemperatur des Substrates liegende Temperatur begrenzt wird.

3. Verfahren nach Anspruch 1, oder 2, **dadurch gekennzeichnet, daß** die Leistung der elektrischen Spannungsquelle so bemessen wird, daß sie bei kontinuierlicher Beaufschlagung des Substrats im vorgesehenen Dickenbereich für eine Erwärmung desselben bis zur Verdampfungstemperatur ausreichend ist und die Zeitdauer der Einschalttakte der elektrischen Spannungsquelle so bemessen wird, daß die Erwärmung des vorgesehenen Dickenbereiches des Substrats auf eine Temperatur zwischen der Schmelz- und Verdampfungstemperatur des Substrates begrenzt wird.

4. Verfahren nach einem der Ansprüche 1 bis 3, **dadurch gekennzeichnet, daß** die Leistung der elektrischen Spannungsquelle und die Zeitdauer eines Einschalttaktes rechnerisch in der Weise ausgewählt werden, daß bei Beaufschlagung des Substrats die Verdampfungstemperatur im vorgesehenen Dickenbereich erreicht und Mikroexplosionen an der Oberfläche des Substrates erzeugt werden, und nachfolgend die Zeitdauer eines Einschalttaktes bei unveränderter Leistung der elektrischen Spannungsquelle so weit verkürzt wird, daß keine Mikroexplosionen an der Oberfläche des Substrates mehr auftreten und eine Erwärmung des Substrats auf eine Temperatur zwischen der Schmelztemperatur und der Verdampfungstemperatur im vorgesehenen Dickenbereich erfolgt.

5. Verfahren nach einem der Ansprüche 1 bis 4, **dadurch gekennzeichnet, daß** die Leistung der elektrischen Spannungsquelle 1 bis 1000 kW beträgt.

6. Verfahren nach einem der Ansprüche 1 bis 5, **dadurch gekennzeichnet, daß** die Spannung der elektrischen Spannungsquelle 100 bis 2000 Volt beträgt.

7. Verfahren nach einem der Ansprüche 1 bis 6, **dadurch gekennzeichnet, daß** als Elektrolytflüssigkeit in Wasser gelöstes Kaliumhydroxid in einer Konzentration von 0,1 bis 0,3 % vorgesehen ist.

8. Verfahren nach einem der Ansprüche 1 bis 7, **dadurch gekennzeichnet, daß** Oxidschichten mit einer Rockwell-Härte von bis zu 120 an der Oberfläche des Substrats erzeugt werden.

9. Verfahren nach einem der Ansprüche 1 bis 8, **dadurch gekennzeichnet, daß** nach dem Ausbilden der Oxidschicht an der Oberfläche des Substrats die Oxidschicht teilweise abgeschliffen wird.

10. Verfahren nach einem der Ansprüche 1 bis 9, **dadurch gekennzeichnet, daß** Oxidschichten an der Oberfläche des Substrates erzeugt werden, die eine Adhäsion zum Substrat von 600 bis 2500 kg/m² aufweisen.

11. Verfahren nach einem der Ansprüche 1 bis 10, **dadurch gekennzeichnet, daß** Oxidschichten an der Oberfläche des Substrates erzeugt werden, die eine Durchschlagspannung von 100 bis 1500 Volt aufweisen.

12. Verfahren nach einem der Ansprüche 1 bis 11, **dadurch gekennzeichnet, daß** Oxidschichten an der Oberfläche des Substrats erzeugt werden, die eine Warmfestigkeit von 1200 bis 2500 °C aufweisen.

13. Verfahren nach einem der Ansprüche 1 bis 12, **dadurch gekennzeichnet, daß** über die Gesamtzeitdauer der Beaufschlagung des Substrates mit der pulsierenden Spannung der elektrischen Spannungsquelle die Leistung und/oder die Zeitdauer der einzelnen Einschalttakte derselben vergrößert werden.

14. Verwendung von nach den vorangehenden Ansprüchen mit Oxidschichten ausgebildeten Substraten zum Herstellen von Verbundwerkstoffen mit einer mittleren Schicht aus einem nichtmetallischen Werkstoff, wie Styropor oder Hartschaumstoff und äußeren Schichten auf Basis der Substrate, wobei jeweils außenseitig der Substrate die Oxidschicht ausgebildet ist und die Substrate mit der nichtmetallischen inneren Schicht verbunden, vorzugsweise verklebt sind.

## Claims

1. A process for producing oxide layers on the surface of a substrate based on light metals, such as aluminium, magnesium, beryllium and/or their alloys and/or titanium, in which the substrate, as one electrode, is immersed, together with a counterelectrode, in an electrolyte liquid and is exposed to a pulsed electric voltage from an electric voltage source, which is generated by switching the electric voltage source on and off cyclically with a high frequency, the region of the thickness of the substrate which is intended for the formation of the oxide layer, starting from its surface which is adjacent to the counterelectrode, being heated by means of discharge currents which form between the substrate and the counterelectrode, and the duration of the on-times and the power of the electric voltage source being such that the region of the thickness of the substrate which is intended for the oxide formation is heated to a temperature which lies between the melting temperature and evaporation temperature of the substrate and, in the process, the oxide layer is formed, **characterized in that** the process is carried out at frequencies of the electric voltage source of from 1.6 to 100 kHz, corresponding to a duration of the electric voltage source of from 5·10⁻⁶ s to 150·10⁻⁶ s and a duration of an off-time which is present between two successive on-times which is from one to three times the duration of an on-time, and at a current density on the substrate exposed to the electric voltage source of from 2 to 500 A/m², oxide layers with a thickness of from 7 to 1000 *µ*m being produced on the surface of the substrate.

2. A process according to claim 1, **characterized in that** the power of the electric voltage source is such that, during an on-time, spark discharges or micro-arcs are produced on the surface of the substrate, which discharges or arcs, in regions where they come into contact with the surface, heat the substrate in the intended thickness region, the duration of the on-times being such that the heating is restricted to a temperature which lies between the melting temperature and the evaporation temperature of the substrate.

3. A process according to either of claims 1 and 2, **characterized in that** the power of the electric voltage source is such that, when the substrate is exposed to this source continuously, it is sufficient, in the intended thickness region, to heat this region to the evaporation temperature, and the duration of the on-times of the electric voltage source is such that the heating of the intended region of the thickness of the substrate is limited to a temperature between the melting temperature and the evaporation temperature of the substrate.

4. A process according to any one of claims 1 to 3, **characterized in that** the power of the electric voltage source and the duration of an on-time are calculated and selected in such a manner that, when the voltage is applied to the substrate, the evaporation temperature is reached in the intended thickness region and micro-explosions are produced at the surface of the substrate, and then the duration of an on-time is shortened, without the power of the electric voltage source being changed, to such an extent that no further micro-explosions occur at the surface of the substrate and the substrate is heated to a temperature between the melting temperature and the evaporation temperature in the intended thickness region.

5. A process according to any one of claims 1 to 4, **characterized in that** the power of the electric voltage source is from 1 to 1000 kW.

6. A process according to any one of claims 1 to 5, **characterized in that** the voltage of the electric voltage source is from 100 to 2000 volts.

7. A process according to any one of claims 1 to 6, **characterized in that** the electrolyte liquid provided is potassium hydroxide dissolved in water, in a concentration of 0.1 to 0.3%.

8. A process according to any one of claims 1 to 7, **characterized in that** oxide layers with a Rockwell hardness of up to 120 are produced on the surface of the substrate.

9. A process according to any one of claims 1 to 8, **characterized in that**, after the oxide layer has been formed on the surface of the substrate, the oxide layer is partially ground off.

10. A process according to any one of claims 1 to 9, **characterized in that** oxide layers which present an adhesion to the substrate of from 600 to 2500 kg/m² are produced on the surface of the substrate.

11. A process according to any one of claims 1 to 10, **characterized in that** oxide layers which have a breakdown voltage of from 100 to 1500 volts are produced on the surface of the substrate.

12. A process according to any one of claims 1 to 11, **characterized in that** oxide layers which have a heat resistance of from 1200 to 2500°C are produced on the surface of the substrate.

13. A process according to any one of claims 1 to 12, **characterized in that** throughout the entire time in which the substrate is exposed to the pulsed voltage of the electric voltage source, the power and/or the duration of the individual on-times of this source are increased.

14. The use of substrates which have been formed with oxide layers according to the preceding claims for producing composite materials with a middle layer of a non-metallic material, such as Styropor or hard foam, and outer layers based on the substrates, the oxide layer in each case being formed on the outer side of the substrates and the substrates being joined, preferably by adhesive bonding, to the non-metallic inner layer.

## Revendications

1. Procédé pour la création de couches d'oxyde à la surface d'un substrat à base de métaux légers tels que l'aluminium, le magnésium, le béryllium et/ou leurs alliages et/ou le titane, dans lequel le substrat est plongé en tant qu'électrode dans un liquide d'électrolyte en même temps qu'une contre-électrode, et une tension électrique pulsée lui est appliquée par une source de tension électrique qui est créée par le branchement et le débranchement cadencés à haute fréquence de la source de tension électrique, la zone d'épaisseur du substrat prévue pour la formation de la couche d'oxyde à partir de sa surface voisine de la contre-électrode étant chauffée au moyen des courants de décharge qui se forment entre le substrat et la contre-électrode, la durée des pulsations de branchement et la puissance de la source de tension électrique étant dimensionnées de telle sorte que la zone d'épaisseur du substrat prévue pour la formation d'oxyde est chauffée à une température située entre la température de fusion et la température de vaporisation du substrat, pour ainsi former la couche d'oxyde, **caractérisé en ce que** le procédé est conduit à des fréquences de la source de tension électrique de 1,6 à 100 kHz, qui correspondent à une durée de la source de tension électrique de 5.10⁻⁶ s à 150.10⁻⁶ s et à une durée d'une pulsation de débranchement située entre deux pulsations successives de branchement à hauteur de une à trois fois la durée d'une pulsation de branchement, et à une densité de courant sur le substrat auquel est appliquée la source de tension électrique de 2 à 500 A/m², les couches d'oxyde étant créées à la surface du substrat sur une épaisseur de 7 à 1 000 *µ*m.

2. Procédé selon la revendication 1, **caractérisé en ce que** la puissance de la source de tension électrique est dimensionnée de telle sorte que pendant la durée d'une pulsation de branchement, des décharges par étincelles ou de micro-arcs lumineux sont créés à la surface de substrat et chauffent le substrat sur l'épaisseur de couche prévue dans leur zone d'action à la surface, la durée des pulsations de branchement étant dimensionnée de telle sorte que l'échauffement soit limité à une température située entre la température de fusion et la température de vaporisation du substrat.

3. Procédé selon la revendication 1 ou 2, **caractérisé en ce que** la puissance de la source de tension électrique est dimensionnée de telle sorte qu'elle suffit à chauffer la zone d'épaisseur prévue du substrat jusqu'à la température de vaporisation lorsqu'elle est appliquée en continu sur le substrat, et la durée des pulsations de branchement de la source électrique de tension est dimensionnée de telle sorte que l'échauffement de la zone d'épaisseur prévue du substrat soit limité à une température située entre la température de fusion et la température de vaporisation du substrat.

4. Procédé selon l'une des revendications 1 à 3, **caractérisé en ce que** la puissance de la source de tension et la durée d'une pulsation de branchement sont sélectionnées par calcul de telle sorte que la température de vaporisation soit atteinte dans la zone d'épaisseur prévue lorsque la source est appliquée sur le substrat et que des micro-explosions sont créées à la surface du substrat, et ensuite la durée d'une impulsion de branchement est raccourcie sans modifier la puissance de la source électrique de tension dans une mesure telle que des micro-explosions n'apparaissent plus à la surface du substrat et que l'on obtienne dans la zone d'épaisseur prévue un échauffement du substrat à une température comprise entre la température de fusion et la température de vaporisation.

5. Procédé selon l'une des revendications 1 à 4, **caractérisé en ce que** la puissance de la source électrique de tension est de 1 à 1 000 kW.

6. Procédé selon l'une des revendications 1 à 5, **caractérisé en ce que** la tension de la source électrique de tension est de 100 à 2 000 Volts.

7. Procédé selon l'une des revendications 1 à 6, **caractérisé en ce que** comme liquide électrolytique, on prévoit de l'hydroxyde de potassium en solution dans l'eau à une concentration de 0,1 à 0,3 %.

8. Procédé selon l'une des revendications 1 à 7, **caractérisé en ce que** l'on crée à la surface du substrat des couches d'oxyde d'une dureté Rockwell pouvant atteindre 120.

9. Procédé selon l'une des revendications 1 à 8, **caractérisé en ce qu'**après la formation de la couche d'oxyde à la surface du substrat, la couche d'oxyde est partiellement abrasée.

10. Procédé selon l'une des revendications 1 à 9, **caractérisé en ce que** l'on crée à la surface du substrat des couches d'oxyde qui présentent vis-à-vis du substrat une adhérence de 600 à 2 500 kg/m².

11. Procédé selon l'une des revendications 1 à 10,
**caractérisé en ce que** l'on crée à la surface du substrat des couches d'oxyde qui présentent une tension de claquage de 100 à 1 500 Volts.

12. Procédé selon l'une des revendications 1 à 11, **caractérisé en ce que** l'on crée à la surface du substrat des couches d'oxyde qui présentent une tenue à la chaleur de 1 200 à 2 500° C.

13. Procédé selon l'une des revendications 1 à 12, **caractérisé en ce que** la puissance et/ou la durée des impulsions individuelles de branchement sont augmentées pendant toute la durée de l'application d'une tension pulsée par la source de tension électrique sur le substrat.

14. Utilisation de substrats dotés de couches d'oxyde selon les revendications précédentes, pour la fabrication de matériaux composites présentant une couche centrale en matériau non métallique, par exemple le Styropor ou une mousse dure, et des couches extérieures à base des substrats, la couche d'oxyde étant formée chaque fois sur le côté extérieur des substrats et les substrats étant reliés, de préférence par collage, à une couche intérieure non métallique.
